# EUROPEAN PATENT APPLICATION

(11) **EP 4 516 555 A1**
(43) Date of publication of application: **05.03.2025**
(21) Application number: 23193696.4
(22) Date of filing: 28.08.2023
(51) Int. Cl.: B60K 31/00, B60W 30/045, G05D 1/00, G06V 20/56, F16H 61/02

(54) **DISCRETE DISTANCE CONTROL FOR A VEHICLE**

(71) Applicant: VOLVO TRUCK CORPORATION, 405 08 Göteborg (SE)
(72) Inventor: LAINE, Leo, 414 84 Göteborg (SE); JAKOBSSON, Samuel, 418 73 Göteborg (SE); RYDQUIST, Kristoffer, 427 40 Billdal (SE); KARPENMAN, Fredrik, 421 47 Västra Frölunda (SE)
(74) Representative: Ström & Gulliksson AB

(57) **Abstract**

A computer system is disclosed comprising processing circuitry configured to receive a manual input corresponding to a predetermined discrete distance to move the vehicle, and move the vehicle the predetermined discrete distance according to the received manual input. A corresponding computer-implemented method is also disclosed.

## Description

### TECHNICAL FIELD

The disclosure relates generally to vehicle control. In particular aspects, the disclosure relates to systems and methods for moving a vehicle a discrete distance according to a manual input. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

In many vehicle operations, precise control of vehicle movement is required, such as when connecting a trailer to a truck, backing a truck up to an unloading location for a material load or a container, connecting a truck to a skip loader, unloading an excavator to a dump truck, and parking. In some applications, this control must be performed many times every day.

An accelerator, brake pedal, and/or a remote control may be used to move a vehicle small distances. For example, an operator may operate the vehicle using the accelerator pedal to request an acceleration and use visual reference points to judge the distance covered. However, the precision associated with such control is often inadequate. The smaller the distance, the harder this becomes. Vehicle weight, surface conditions, and the like will also affect how well this control can be performed by the driver.

### SUMMARY

This disclosure provides systems, methods and other approaches for controlling movement of a vehicle based on a manual input from an operator that corresponds to a predetermined discrete distance over which the vehicle should be moved. By providing control based on a predetermined discrete distance, an operator can make an associated input that results in a known and precise movement of the vehicle. As such, the vehicle can be moved small and precise distances in a reliable manner, facilitating control of the vehicle in situations where precision is required.

According to a first aspect of the disclosure, there is provided a computer system comprising processing circuitry configured to receive a manual input corresponding to a predetermined discrete distance to move a vehicle, and move the vehicle the predetermined discrete distance according to the received manual input.

The first aspect of the disclosure may seek to alleviate current issues with precise control of a vehicle by a human operator. A technical benefit may include reliable and precise movement of a vehicle based on a simple operator input. This ensures that, in situations such as connecting a trailer to a truck, backing a truck up to an unloading location for a material load or a container, and parking, accurate control is provided and accidents are prevented.

Optionally in some examples, including in at least one preferred example, the predetermined discrete distance is less than 1m. A technical benefit may include the precise control of the vehicle over small distances, as a simple manual input from the operator corresponds to a small but precise movement of the vehicle.

Optionally in some examples, including in at least one preferred example, the discrete movement of the vehicle comprises a longitudinal movement. A technical benefit may include reliable control of the vehicle in straight-line motion, meaning alignment of the vehicle to a target can be ensured.

Optionally in some examples, including in at least one preferred example, the processing circuitry is further configured to receive a plurality of discrete manual inputs corresponding to a plurality of discrete movements of the vehicle, and move the vehicle according to the plurality of discrete movements in a continuous manner. A technical benefit may include flexibility of control for an operator, where control is not limited to a single discrete movement of the vehicle, but multiples of the discrete value can be used to move the vehicle over longer distances where necessary.

Optionally in some examples, including in at least one preferred example, the processing circuitry is further configured to enter a discrete movement mode to move the vehicle the predetermined discrete distance in response to receiving a predetermined operator input. A technical benefit may include enabling normal control of the vehicle until it is near to a target, and then preventing normal control once a discrete movement mode is entered. This means that accidental control inputs, for example to the accelerator pedal, do not result in unwanted movement of the vehicle when precise movement is required.

Optionally in some examples, including in at least one preferred example, the processing circuitry is further configured to move the vehicle by controlling a motion support device of the vehicle, such as an internal combustion engine, an electrical machine, or one or more brakes. A technical benefit may include that the system can be implemented into existing motion systems for different types of vehicle, which can then be controlled according to the manual operator input.

Optionally in some examples, including in at least one preferred example, the processing circuitry is further configured to move the vehicle from a standstill by selecting a gear ratio based on at least one of a mass of the vehicle, a slope of the vehicle path, and gear parameters of the vehicle. A technical benefit may include the improvement of control of the vehicle under certain operating conditions, such as preventing rollback when the vehicle is on a slope, thus improving safety of vehicle operation.

Optionally in some examples, including in at least one preferred example, the processing circuitry is configured to receive the manual input from a user interface comprising a first input element configured to receive a manual input corresponding to a discrete forward movement of the vehicle, and a second input element configured to receive a manual input corresponding to a discrete backward movement of the vehicle. A technical benefit may include the provision of a simple and intuitive interface for an operator to control movement of the vehicle in a precise manner.

Optionally in some examples, including in at least one preferred example, the user interface is comprised in the vehicle. A technical benefit may include enabling an in-vehicle operator to control movement of the vehicle in a precise manner.

Optionally in some examples, including in at least one preferred example, the user interface is located remotely from the vehicle. A technical benefit may include enabling a remote vehicle operator to control movement of the vehicle in a precise manner.

Optionally in some examples, including in at least one preferred example, the processing circuitry is further configured to, during motion of the vehicle according to the received manual input, receive a wheel speed of at least one wheel of the vehicle, and determine if the wheel speed is within a desired range. A technical benefit may include ensuring that the vehicle is operated at a safe and/or comfortable speed whilst the precise motion control is provided.

Optionally in some examples, including in at least one preferred example, the processing circuitry is further configured to receive a rotation of a component of a powertrain of the vehicle, and determine if the motion of the vehicle based on the received rotation corresponds to the received manual input. A technical benefit may include the monitoring of the movement distance of the vehicle to ensure that the desired motion is accurately implemented, such that any adjustments can be performed as necessary.

According to a second aspect of the disclosure, there is provided a vehicle comprising the computer system.

According to a third aspect of the disclosure, there is provided a computer-implemented method, comprising receiving, by processing circuitry of a computer system, a manual input corresponding to a predetermined discrete distance to move a vehicle, and moving, by the processing circuitry, the vehicle the predetermined discrete distance according to the received manual input.

The third aspect of the disclosure may seek to alleviate current issues with precise control of a vehicle by a human operator. A technical benefit may include reliable and precise movement of a vehicle based on a simple operator input. This ensures that, in situations such as connecting a trailer to a truck, backing a truck up to an unloading location for a material load or a container, and parking, accurate control is provided and accidents are prevented.

According to a fourth aspect of the disclosure, there is provided a computer program product comprising program code for performing, when executed by processing circuitry, the computer-implemented method.

According to a fifth aspect of the disclosure, there is provided a non-transitory computer-readable storage medium comprising instructions, which when executed by processing circuitry, cause the processing circuitry to perform the computer-implemented method.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary system diagram, in terms of functional blocks, of a computer system according to an example.
**FIGs. 2A** to **2D** schematically show exemplary user interfaces according to examples.
**FIG. 3** is a flow chart of an example computer-implemented method according to an example.
**FIG. 4** is a schematic diagram of an exemplary computer system for implementing examples disclosed herein, according to an example.

Like reference numerals refer to like elements throughout the description.

### DETAILED DESCRIPTION

The detailed description set forth below provides information and examples of the disclosed technology with sufficient detail to enable those skilled in the art to practice the disclosure.

In many vehicle operations, for example connecting a trailer to a truck, backing a truck up to an unloading location for a material load or a container, and parking, precise control of vehicle movement is required. In some applications, this control may be performed many times every day. Use of an accelerator and/or brake pedal or a remote control by an operator often does not provide adequate precision, especially for small distances and differing operating conditions.

To remedy this, systems, methods and other approaches are provided for controlling movement of a vehicle based on a manual input from an operator that corresponds to a predetermined discrete distance over which the vehicle should be moved. By providing control based on a predetermined discrete distance, an operator can make a simple input that results in a known and precise movement of the vehicle. As such, the vehicle can be moved small and precise distances in a reliable manner.

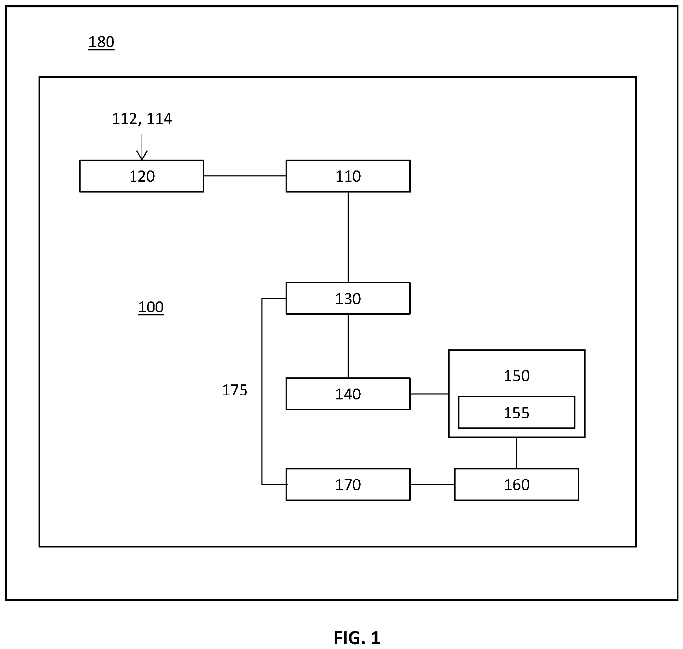

**FIG. 1** is an exemplary system diagram, in terms of functional blocks, of a system **100** for controlling a vehicle **180** according to an example. The system **100** can be used to implement precise control of vehicle movement by implementing a discrete distance movement of a vehicle according to a manual operator input.

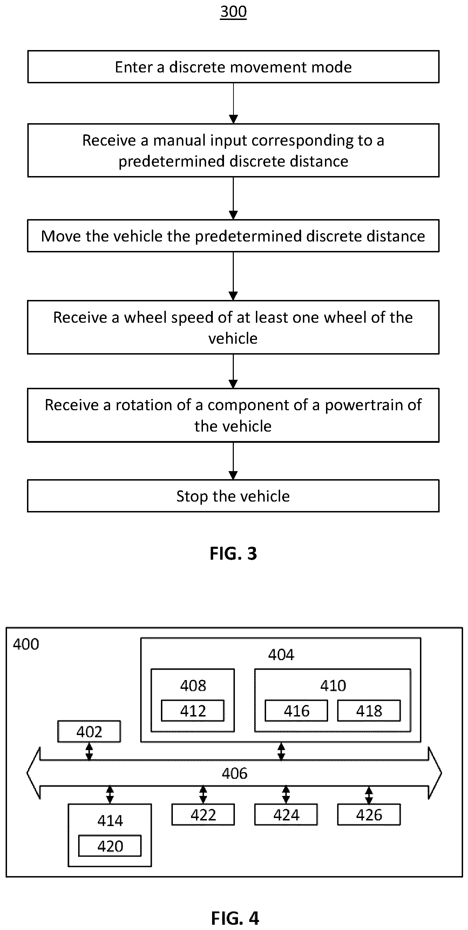

The system **100** comprises a discrete distance control unit (DDCU) **110** in the form of a computer system. The DDCU **110** comprises processing circuitry configured to implement various operations disclosed below, for example in relation to **FIG. 3****.** The DDCU **110** may include a memory storing instructions that, when executed by the processing circuitry, cause the processing circuitry to perform the various operations.

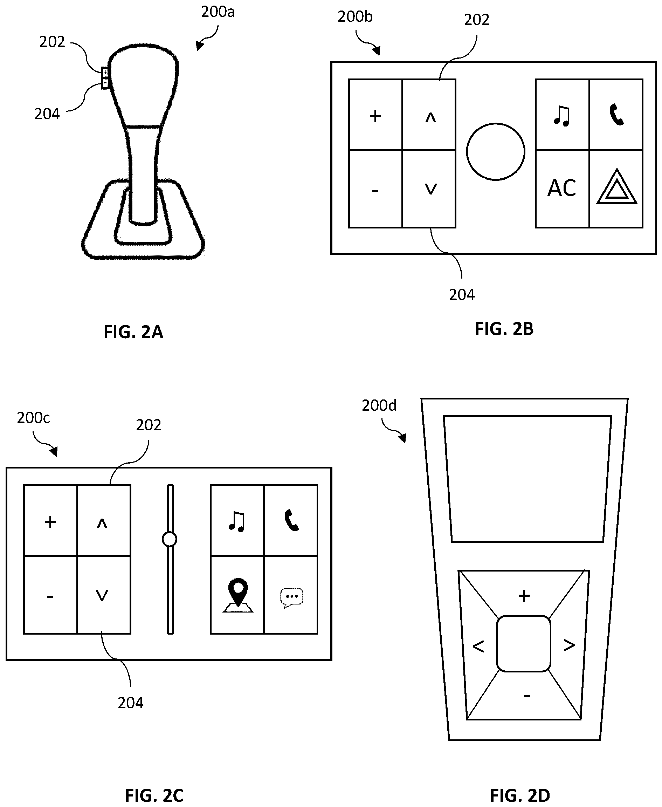

The system **100** further comprises a user interface **120.** The user interface **120** is configured to receive a manual input from an operator of the vehicle **180** and provide the input to the DDCU **110.** As such, the user interface **120** is communicatively coupled to the DDCU **110.** The user interface **120** may be communicatively coupled to the DDCU **110** by a wired or wireless connection. The user interface **120** may be comprised in the vehicle **180** or located remotely from the vehicle. The user interface **120** will be discussed in more detail in relation to **FIGs. 2A** to **2D****.**

The system **100** further comprises a vehicle main control unit (VMCU) **130.** The VMCU **130** may also be known as an electronic control unit (ECU) or electronic control module (ECM). The VMCU **130** is configured to implement control of the vehicle **180,** for example by providing control signals to relevant components of the vehicle **180,** as discussed below. The VMCU **130** is also communicatively coupled to the DDCU **110,** for example by a wired or wireless connection. The VMCU **130** may be configured to send and receive signals and/or data to and from the DDCU **110.** In some examples, the DDCU **110** may be integrated as part of the VMCU **130,** for example as a module in the VMCU **130.** In other embodiments, the DDCU **110** and the VMCU **130** may be separate entities that are communicatively coupled.

The system **100** further comprises one or more motion support devices (MSDs) **140.** Example MSDs **140** include internal combustion engines (ICEs) such as a diesel engine, electrical machines such as electric motors, and brake systems such as service brakes of the vehicle. The one or more MSDs **140** are configured to receive control signals from the VMCU **130** and implement physical motion of the vehicle **180** accordingly.

In some examples, the system **100** further comprises a gearbox **150.** The gearbox **150** may function in a known manner to transmit rotation from the one or more MSDs **140** into rotation of a wheel or axle of the vehicle **180.** The gearbox **150** may itself comprise a transmission electronic control unit (TECU) **155** in order to receive control signals, for example from the VMCU **130.** In some examples, the gearbox **150** may be omitted and an MSD **140** may be integrated directly with an axle of the vehicle **180.**

The system **100** further comprises one or more axles or wheels **160.** An axle may be coupled to one, two, or more wheels. Rotation provided by the one or more MSDs **140** is implemented by the one or more axles or wheels **160** in order to provide motion of the vehicle **180.**

Different combinations of MSDs **140,** gearboxes **150,** axles or wheels **160** will be readily envisaged. For example, the vehicle **180** may comprise an ICE and associated gearbox to control one or more driven axles. Alternatively, the vehicle **180** may comprise an electric motor and associated gearbox to control one or more driven axles. The vehicle **180** may comprise an electric motor and integrated with a driven axle or within a wheel. Different combinations of these configurations are also possible.

In some examples, the system **100** further comprises one or more wheel sensors **170.** The one or more wheel sensors are configured to detect one or more parameters **175** associated with the wheels of the vehicle **180,** for example, a wheel speed, angle of rotation, and the like. The one or more wheel sensors **170** are communicatively coupled to the VMCU **130** and configured to provide detected parameters **175** to the VMCU **130.**

In some examples, the system **100** is implemented in a vehicle **180,** as shown in **FIG. 1****.** In some examples, the DDCU **110,** the user interface **120,** and/or the VMCU **130** may be implemented externally to and remotely from the vehicle **180.**

The system **100** and methods disclosed herein can be used with any suitable form of vehicle **180.** For example, the disclosure can be applied in heavy-duty vehicles, such as trucks, buses, and construction equipment, in personal vehicles such as cars, vans, or motorbikes, or in any other suitable form of vehicle.

The system **100,** and in particular the DDCU **110,** may be used to implement control of vehicle motion, for example over small distances where precision is specifically required. To this end, the DDCU **110** is configured to receive a manual input **112** corresponding to a predetermined discrete distance **114** to move the vehicle **180** and move the vehicle **180** the predetermined discrete distance **114** according to the manual input **112.**

For example, the operator may make a manual input **112** to the user interface **120.** This may be a button press, actuation of a pedal, press or flick of a switch, interaction with a touch screen, or other suitable input. The input corresponds to a predetermined discrete distance **114** to move the vehicle **180.** That is to say, for example, that one press of a button corresponds to a single discrete movement of the vehicle, for example a 20cm forward movement. In some examples, the operator may make a plurality of discrete manual inputs to the user interface **120,** as will be discussed below. In the context of the present application a manual input **112** may comprise an input made by the foot of the operator, for example actuation of a pedal.

The discrete movement distance can be preset in the DDCU **110,** for example by an operator or in the factory. The discrete movement distance may be editable by the operator before an operation cycle for the vehicle **180.** That is to say, the manual input **112** to the user interface **120** corresponds to the same predetermined distance during an operation cycle for the vehicle **180.**

In some examples, the predetermined discrete distance **114** is less than 1m. For example, the predetermined discrete distance **114** may be 5cm, 10cm, 20cm, or any other suitable value. By setting the distance accordingly, precise control of the vehicle over small distances can be provided. For larger distances, the normal control method for the vehicle **180,** for example the accelerator pedal, can be used. It will be appreciated that a predetermined discrete distance **114** of less than 1m is not essential, and larger distances could be implemented. This may be advantageous for certain applications, such as with gravel pit trucks, timber trucks and similar applications where there is often a need to move a "trailer-length".

In some examples, the DDCU **110** may be configured to enter a discrete movement mode in order to operate as described. Entering the discrete movement mode may be triggered by a predetermined operator input to the user interface **120.** For example, a button or other input element of the user interface **120** may be held down for a predetermined time, a number of buttons may be pressed simultaneously, or a specific sequence of inputs may be made in order to trigger the discrete movement mode. The operator may be provided with feedback, for example visual, audio, or tactile feedback, indicating that the discrete movement mode has been entered. This can ensure that accidental control inputs, for example to the accelerator pedal, do not result in unwanted movement of the vehicle **180** when precise movement is required.

Once a manual input **112** has been received, the DDCU **110** is configured to move the vehicle **180** the predetermined discrete distance **114** according to the received input. This can be achieved by sending a signal to the VMCU **130** to control one or more MSDs **140** of the vehicle **180.** The one or more MSDs **140** may in turn control motion of one or more axles or wheels **160** of the vehicle, for example via the gearbox **150,** such that the vehicle **180** is moved the specified discrete distance. The person skilled in the art will understand how to implement the specified discrete distance based on parameters such as wheel circumference and gear ratio.

The vehicle motion can be implemented in a known manner. For example, in response to a control signal, a suitable gear can be selected, the clutch closed, a motor torque applied, and the brakes released. The movement can also be controlled at a specified acceleration or speed. At standstill, the gear ratio implemented by the gearbox **150** can be selected based on at least one of a mass of the vehicle **180,** a slope of the vehicle path, and gear parameters of the vehicle **180.** For example, the slope of the road can be determined and a starting gear can be selected accordingly. This can be achieved using vehicle models, fixed calibration data, and/or adaptations for friction and rolling resistance. The onward movement of the vehicle can then be controlled in the normal manner. This can help improve safety of vehicle operation, for example by preventing rollback when the vehicle **180** is on a slope.

In some examples, the movement of the vehicle **180** is a longitudinal movement, for example a straight-line movement forwards or backwards. This may ensure that alignment of the vehicle **180** to a target is maintained as the movement is implemented. In some examples, the movement may include some lateral motion, for example through the operator turning the steering wheel.

As discussed above, the operator may make a plurality of discrete manual inputs **112** to the user interface **120.** In this case, the DDCU **110** is configured to move the vehicle **180** according to the plurality of discrete movements in a continuous manner. For example, if the predetermined discrete distance **114** is set at 10cm, and the operator presses the associated button of the user interface **120** three times, then the DDCU **110** will move the vehicle **180** 30cm without interruption. In this way, multiples of the discrete value can be used to move the vehicle **180** over longer distances where necessary.

The DDCU **110** may also be configured to monitor certain aspects of the motion as the vehicle **180** is moving. For example, the DDCU **110** may receive a wheel speed of at least one wheel **160** of the vehicle **180,** for example from a wheel sensor **170.** For example, the DDCU **110** may receive a signal representing a wheel speed of at least one wheel **160** of the vehicle **180.** The DDCU **110** can then determine if the wheel speed is within a desired range. For example, it may be desired that the vehicle **180** is operated at a safe and/or comfortable speed whilst the precise motion control is provided, and this can be monitored by the DDCU **110** and corrected if necessary. The desired wheel speed range can be set to take into account engine/clutch torque, rotational engine acceleration, vehicle mass, friction, overall ratio, steering wheel position, and effective wheelbase, for example as in anti-lock braking systems (ABS). As such, current ABS implementations can be used for this purpose. In some examples, current ABS implementations can merely be used to provide a binary indication of whether the vehicle **180** is moving or at standstill. AB S, anti-slip-regulation (ASR), or other traction control strategies may also be implemented to take wheel slip into account when necessary (e.g. on low friction surfaces such as ice or mud).

The DDCU **110** may also be configured to determine whether the implemented motion corresponds to the received manual input **112.** For example, the DDCU **110** may receive a rotation of a component of a powertrain of the vehicle **180,** for example a signal representing a rotation. For example, one or more rotational sensors in an MSD **140** or the gearbox **150** may feed a rotation measure back to the DDCU **110,** for example a number of rotations or a rotation angle. The DDCU **110** may also receive values such as an engine speed, input shaft speed, countershaft speed, main shaft speed, or shift fork position (to get the current gear ratio), from which a number of rotations can be determined. For example, knowing the rotation speed of the gearbox shafts, the current gear selected, the gear ratio and the wheel circumference, the distance of movement of the vehicle **180** can be calculated from the number of rotations of the engine/motor. Certain data that may be required for this, for example ratio data for gears in various gearboxes, axle ratios, wheel sizes, etc., can be stored in a database associated with the DDCU **110.** Alternatively, the DDCU **110** may use other distance determination means, such as distance sensors of the vehicle or positioning data such as GPS. This may be useful in situations where the vehicle movement does not correspond exactly to a rotation of a component of a powertrain of the vehicle **180,** for example in situations where there is wheel slip.

The DDCU **110** can then compare the determined distance to the distance specified by the received manual input **112.** If the determined distance corresponds to the desired distance, the vehicle can be stopped (e.g. by applying the brakes, opening the clutch and reducing the engine torque). If the determined distance does not correspond to the desired distance, the DDCU **110** may provide a further control signal to correct the movement of the vehicle **180,** or may feed the error back to the operator such that the operator can make a further input.

The system **100,** and in particular the DDCU **110,** may address current issues with precise control of a vehicle by a human operator by providing reliable and precise movement of a vehicle based on a simple operator input. This ensures that, in situations such as connecting a trailer to a truck, backing a truck up to an unloading location for a material load or a container, and parking, accurate control is provided and accidents are prevented.

**FIGs. 2A** to **2D** illustrate exemplary user interfaces **200** according to examples. The user interfaces **200** are examples of the user interface **120** discussed in relation to **FIG. 1****.** The user interfaces **200** are configured to receive a manual input **112** from an operator of the vehicle **180** and provide the input to the DDCU **110.**

As will be discussed below, each user interface **200** comprises a first input element **202** configured to receive a manual input **112** corresponding to a discrete forward movement of the vehicle **180,** and a second input element **204** configured to receive a manual input **112** corresponding to a discrete backward movement of the vehicle **180.** In some examples, the first and second input elements **202, 204** may receive a plurality of manual inputs **112** (for example a plurality of consecutive button presses). In some examples, the first and second input elements **202, 204** may perform this function when the DDCU **110** is in the discrete movement mode, and perform another function during normal operation. In other examples, the input elements **202, 204** may be dedicated to discrete movement function.

**FIG. 2A** shows a user interface **200a** in the form of a gear lever for the vehicle **180.** The gear lever comprises buttons **202, 204.** The first (+) button **202** is configured to receive a manual input **112** corresponding to a discrete forward movement of the vehicle **180.** The second (-) button **202** is configured to receive a manual input **112** corresponding to a discrete backward movement of the vehicle **180.**

**FIG. 2B** shows a user interface **200b** in the form of a central console or dashboard for the vehicle **180.** The central console comprises a number of different inputs, as known in the art, as well as buttons **202, 204.** The first (^) button **202** is configured to receive a manual input **112** corresponding to a discrete forward movement of the vehicle **180.** The second (v) button **202** is configured to receive a manual input **112** corresponding to a discrete backward movement of the vehicle **180.** Alternatively, the + and - buttons of the console could be used to implement the first and second input elements **202, 204.**

**FIG. 2C** shows a user interface **200c** in the form of a touch screen. The touch screen could be implemented in the vehicle **180,** or could be the screen of a personal user device such as a smart phone or tablet that is communicatively connected to the vehicle **180.** The touch screen comprises a number of different icons corresponding to different functions, as known in the art, as well as icons **202, 204.** The first (^) icon **202** is configured to receive a manual input **112** corresponding to a discrete forward movement of the vehicle **180.** The second (v) icon **202** is configured to receive a manual input **112** corresponding to a discrete backward movement of the vehicle **180.** Alternatively, the + and - icons of the console could be used to implement the first and second input elements **202, 204.**

**FIG. 2D** shows a user interface **200d** in the form of a remote control device. The remote control device can be communicatively connected to the vehicle **180** in order to control vehicle operation from outside the vehicle **180.** The remote control device could be a dedicated remote control device or a personal user device such as a smart phone or tablet. The remote control device comprises a number of different buttons, as known in the art, as well as buttons **202, 204.** The first (+) button **202** is configured to receive a manual input **112** corresponding to a discrete forward movement of the vehicle **180.** The second (-) button **202** is configured to receive a manual input **112** corresponding to a discrete backward movement of the vehicle **180.** Alternatively, the < and > icons of the console could be used to implement the first and second input elements **202, 204.**

The user interfaces **200** shown in **FIGs. 2A** to **2D** provide a simple and intuitive interface for an operator to control movement of the vehicle in a precise manner. The user interfaces **200a-c** shown in **FIGs. 2A** to **2C** enable an in-vehicle operator to control movement of the vehicle in a precise manner. The user interface **200d** shown in **FIG. 2D** enables a remote operator to control movement of the vehicle in a precise manner. The user interfaces **200** shown in **FIGs. 2A** to **2D** are examples and should not be considered limiting. For example, a user interface **120** could be implemented in other ways, for example as a joystick, pedal, switch, or the like.

**FIG. 3** is a flow chart of an example computer-implemented method **300** according to an example. The method **300** may be performed by the DDCU **110** described in relation to **FIG. 1****.**

At **302,** the DDCU **110** enters a discrete movement mode. As discussed above, entering the discrete movement mode may be triggered by a predetermined operator input to the user interface **120.** For example, a button or other input element of the user interface **120** may be held down for a predetermined time, a number of buttons may be pressed simultaneously, or a specific sequence of inputs may be made in order to trigger the discrete movement mode. The operator may be provided with feedback, for example visual, audio, or tactile feedback, indicating that the discrete movement mode has been entered.

In the discrete movement mode, an input from an operator corresponds to a predetermined discrete distance **114** to move the vehicle **180.** The discrete movement distance can be preset in the DDCU **110,** for example by an operator or in the factory, or can be editable by the operator before an operation cycle for the vehicle **180.** In some examples, the predetermined discrete distance **114** is less than 1m. For example, the predetermined discrete distance **114** may be 5cm, 10cm, 20cm, or any other suitable value.

At **304,** the DDCU **110** receives a manual input **112** corresponding to a predetermined discrete distance **114** to move the vehicle. For example, the DDCU **110** may receive a signal representing a manual input **112.** The manual input **112** may be received from the user interface **120.** The manual input **112** may be a button press, actuation of a pedal, press or flick of a switch, interaction with a touch screen, or other suitable input. The input corresponds to a predetermined discrete distance **114** to move the vehicle **180.** That is to say, for example, that one press of a button corresponds to a single discrete movement of the vehicle, for example a 20cm forward movement. In some examples, the operator may make a plurality of discrete manual inputs **112** to the user interface **120,** and the DDCU **110** may receive a corresponding signal. For example, the DDCU **110** may receive a single signal representing the plurality of discrete manual inputs **112,** or respective signals for each discrete manual input **112.**

At **306,** the DDCU **110** moves the vehicle the predetermined discrete distance **114** according to the received manual input **112.** This can be achieved by sending a signal to the VMCU **130** to control one or more MSDs **140** of the vehicle **180.** The one or more MSDs **140** may in turn control motion of one or more axles or wheels **160** of the vehicle, for example via the gearbox **150,** such that the vehicle **180** is moved the specified discrete distance. At standstill, the starting gear ratio implemented by the gearbox **150** can be selected based on at least one of a mass of the vehicle **180,** a slope of the vehicle path, and gear parameters of the vehicle **180.** In some examples, the movement of the vehicle **180** is a longitudinal movement, for example a straight-line movement forwards or backwards. If the operator makes a plurality of discrete manual inputs **112** to the user interface **120,** the DDCU **110** moves the vehicle **180** according to the plurality of discrete movements in a continuous manner.

At **308,** the DDCU **110** receives a wheel speed of at least one wheel of the vehicle during motion of the vehicle and determines if the wheel speed is within a desired range. For example, the DDCU **110** may receive a signal representing a wheel speed of at least one wheel **160** of the vehicle **180.** For example, the DDCU **110** may receive a wheel speed measurement from a wheel sensor **170.** It may be determined whether the vehicle **180** is moving at a safe and/or comfortable speed whilst precise motion control is provided

At **310,** the DDCU **110** receives a rotation of a component of a powertrain of the vehicle **180,** and determines if the if the motion of the vehicle corresponds to the received manual input **112.** For example, the DDCU **110** may receive a signal representing a rotation. The DDCU **110** compares the determined distance to the distance specified by the received manual input **112.** If the determined distance does not correspond to the desired distance, the DDCU **110** may provide a further control signal to correct the movement of the vehicle **180,** or may feed the error back to the operator such that the operator can make a further input. If the determined distance corresponds to the desired distance, the vehicle **180** can be stopped (e.g., by applying the brakes, opening the clutch, and reducing the engine torque) at **312.**

**FIG. 4** is a schematic diagram of a computer system **400** for implementing examples disclosed herein. The computer system **400** is adapted to execute instructions from a computer-readable medium to perform these and/or any of the functions or processing described herein. The computer system **400** may be connected (e.g., networked) to other machines in a LAN, an intranet, an extranet, or the Internet. While only a single device is illustrated, the computer system **400** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or j ointly execute a set (or multiple sets) of instructions to perform any one or more of the methodologies discussed herein. For example, control system may include a single control unit, or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **400** may comprise at least one computing device or electronic device capable of including firmware, hardware, and/or executing software instructions to implement the functionality described herein. The computer system **400** may include processing circuitry **402** (e.g., processing circuitry including one or more processor devices or control units), a memory **404,** and a system bus **406.** The computer system **400** may include at least one computing device having the processing circuitry **402.** The system bus **406** provides an interface for system components including, but not limited to, the memory **404** and the processing circuitry **402.** The processing circuitry **402** may include any number of hardware components for conducting data or signal processing or for executing computer code stored in memory **404.** The processing circuitry **402** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **402** may further include computer executable code that controls operation of the programmable device.

The system bus **406** may be any of several types of bus structures that may further interconnect to a memory bus (with or without a memory controller), a peripheral bus, and/or a local bus using any of a variety of bus architectures. The memory **404** may be one or more devices for storing data and/or computer code for completing or facilitating methods described herein. The memory **404** may include database components, object code components, script components, or other types of information structure for supporting the various activities herein. Any distributed or local memory device may be utilized with the systems and methods of this description. The memory **404** may be communicably connected to the processing circuitry **402** (e.g., via a circuit or any other wired, wireless, or network connection) and may include computer code for executing one or more processes described herein. The memory **404** may include non-volatile memory **408** (e.g., read-only memory (ROM), erasable programmable read-only memory (EPROM), electrically erasable programmable read-only memory (EEPROM), etc.), and volatile memory **410** (e.g., random-access memory (RAM)), or any other medium which can be used to carry or store desired program code in the form of machine-executable instructions or data structures and which can be accessed by a computer or other machine with processing circuitry **402.** A basic input/output system (BIOS) **412** may be stored in the non-volatile memory **408** and can include the basic routines that help to transfer information between elements within the computer system **400.**

The computer system **400** may further include or be coupled to a non-transitory computer-readable storage medium such as the storage device **414,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **414** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **414** and/or in the volatile memory **410,** which may include an operating system **416** and/or one or more program modules **418.** All or a portion of the examples disclosed herein may be implemented as a computer program **420** stored on a transitory or non-transitory computer-usable or computer-readable storage medium (e.g., single medium or multiple media), such as the storage device **414,** which includes complex programming instructions (e.g., complex computer-readable program code) to cause the processing circuitry **402** to carry out actions described herein. Thus, the computer-readable program code of the computer program **420** can comprise software instructions for implementing the functionality of the examples described herein when executed by the processing circuitry **402.** In some examples, the storage device **414** may be a computer program product (e.g., readable storage medium) storing the computer program **420** thereon, where at least a portion of a computer program **420** may be loadable (e.g., into a processor) for implementing the functionality of the examples described herein when executed by the processing circuitry **402.** The processing circuitry **402** may serve as a controller or control system for the computer system **400** that is to implement the functionality described herein.

The computer system **400** may include an input device interface **422** configured to receive input and selections to be communicated to the computer system **400** when executing instructions, such as from a keyboard, mouse, touch-sensitive surface, etc. Such input devices may be connected to the processing circuitry **402** through the input device interface **422** coupled to the system bus **406** but can be connected through other interfaces, such as a parallel port, an Institute of Electrical and Electronic Engineers (IEEE) 1394 serial port, a Universal Serial Bus (USB) port, an IR interface, and the like. The computer system **400** may include an output device interface **424** configured to forward output, such as to a display, a video display unit (e.g., a liquid crystal display (LCD) or a cathode ray tube (CRT)). The computer system **400** may include a communications interface **426** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

According to certain examples, there is also disclosed:
Example 1: A computer system (110) comprising processing circuitry configured to receive a manual input (112) corresponding to a predetermined discrete distance (114) to move a vehicle (180), and move the vehicle the predetermined discrete distance (114) according to the received manual input.
Example 2: The computer system (110) of example 1, wherein the predetermined discrete distance (114) is less than 1m.
Example 3: The computer system of (110) example 1 or 2, wherein the discrete movement of the vehicle (180) comprises a longitudinal movement.
Example 4: The computer system (110) of any preceding example, wherein the processing circuitry is further configured to receive a plurality of discrete manual inputs (112) corresponding to a plurality of discrete movements of the vehicle (180), and move the vehicle according to the plurality of discrete movements in a continuous manner.
Example 5: The computer system (110) of any of preceding example, wherein the processing circuitry is further configured to enter a discrete movement mode to move the vehicle (180) the predetermined discrete distance (114) in response to receiving a predetermined operator input.
Example 6: The computer system (110) of any of preceding example, wherein the processing circuitry is further configured to move the vehicle (180) by controlling a motion support device (140) of the vehicle, such as an internal combustion engine, an electrical machine, or one or more brakes.
Example 7: The computer system (110) of any of preceding example, wherein the processing circuitry is further configured to move the vehicle (180) from a standstill by selecting a gear ratio based on at least one of a mass of the vehicle, a slope of the vehicle path, and gear parameters of the vehicle.
Example 8: The computer system (110) of any of preceding example, wherein the processing circuitry is configured to receive the manual input (112) from a user interface (120, 200) comprising a first input element (202) configured to receive a manual input corresponding to a discrete forward movement of the vehicle (180), and a second input element (204) configured to receive a manual input corresponding to a discrete backward movement of the vehicle.
Example 9: The computer system (110) of example 8, wherein the user interface (120, 200) is comprised in the vehicle (180) or located remotely from the vehicle.
Example 10: The computer system (110) of any of preceding example, wherein the processing circuitry is further configured to, during motion of the vehicle (180) according to the received manual input (112), receive a wheel speed of at least one wheel (160) of the vehicle, and determine if the wheel speed is within a desired range.
Example 11: The computer system (110) of any of preceding example, wherein the processing circuitry is further configured to receive a rotation of a component of a powertrain of the vehicle (180), and determine if the motion of the vehicle based on the received rotation corresponds to the received manual input (112).
Example 12: A vehicle (180) comprising the computer system (110) of any preceding example.
Example 13: A computer-implemented method (300), comprising receiving (304), by processing circuitry of a computer system (110), a manual input (112) corresponding to a predetermined discrete distance (114) to move a vehicle (180), and moving (306), by the processing circuitry, the vehicle the predetermined discrete distance (114) according to the received manual input.
Example 14: The computer-implemented method (300) of example 13, wherein the predetermined discrete distance (114) is less than 1m.
Example 15: The computer-implemented method (300) of example 13 or 14, wherein the discrete movement of the vehicle (180) comprises a longitudinal movement.
Example 16: The computer-implemented method (300) of any of examples 13 to 15, comprising receiving (304), by the processing circuitry, a plurality of discrete manual inputs (112) corresponding to a plurality of discrete movements of the vehicle (180), and moving (306), by the processing circuitry, the vehicle according to the plurality of discrete movements in a continuous manner.
Example 17: The computer-implemented method (300) of any of examples 13 to 16, further comprising, by the processing circuitry, entering (302) a discrete movement mode to move the vehicle (180) the predetermined discrete distance (114) in response to receiving a predetermined operator input.
Example 18: The computer-implemented method (300) of any of examples 13 to 17, further comprising, by the processing circuitry, moving (306) the vehicle (180) by controlling a motion support device (140) of the vehicle, such as an internal combustion engine, an electrical machine, or one or more brakes.
Example 19: The computer-implemented method (300) of any of examples 13 to 18, further comprising, by the processing circuitry, moving the vehicle (180) from a standstill by selecting a gear ratio based on at least one of a mass of the vehicle, a slope of the vehicle path, and gear parameters of the vehicle.
Example 20: The computer-implemented method (300) of any of examples 13 to 19, comprising, by the processing circuitry, receiving (304) the manual input (112) from a user interface (120, 200) comprising a first input element (202) configured to receive a manual input corresponding to a discrete forward movement of the vehicle (180), and a second input element (204) configured to receive a manual input corresponding to a discrete backward movement of the vehicle.
Example 21: The computer-implemented method (300) of example 20, wherein the user interface (120, 200) is comprised in the vehicle (180) or located remotely from the vehicle.
Example 22: The computer-implemented method (300) of any of examples 13 to 21, further comprising, during motion of the vehicle (180) according to the received manual input (112), receiving, by the processing circuitry, a wheel speed of at least one wheel (160) of the vehicle, and determining, by the processing circuitry, if the wheel speed is within a desired range.
Example 23: The computer-implemented method (300) of any of examples 13 to 22, further comprising receiving, by the processing circuitry, a rotation of a component of a powertrain of the vehicle (180), and determining, by the processing circuitry, if the motion of the vehicle based on the received rotation corresponds to the received manual input (112).
Example 24: A computer program product comprising program code for performing, when executed by processing circuitry, the computer-implemented method (300) of any of examples 13 to 23.
Example 25: A non-transitory computer-readable storage medium comprising instructions, which when executed by processing circuitry, cause the processing circuitry to perform the computer-implemented method (300) of any of claims 13 to 23.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (110) comprising processing circuitry configured to:
receive a manual input (112) corresponding to a predetermined discrete distance (114) to move a vehicle (180); and
move the vehicle the predetermined discrete distance according to the received manual input.

2. The computer system (110) of claim 1, wherein the predetermined discrete distance (114) is less than 1m.

3. The computer system of (110) claim 1 or 2, wherein the discrete movement of the vehicle (180) comprises a longitudinal movement.

4. The computer system (110) of any preceding claim, wherein the processing circuitry is further configured to:
receive a plurality of discrete manual inputs (112) corresponding to a plurality of discrete movements of the vehicle (180); and
move the vehicle according to the plurality of discrete movements in a continuous manner.

5. The computer system (110) of any of preceding claim, wherein the processing circuitry is further configured to enter a discrete movement mode to move the vehicle (180) the predetermined discrete distance (114) in response to receiving a predetermined operator input.

6. The computer system (110) of any of preceding claim, wherein the processing circuitry is further configured to move the vehicle (180) by controlling a motion support device (140) of the vehicle, such as an internal combustion engine, an electrical machine, or one or more brakes.

7. The computer system (110) of any of preceding claim, wherein the processing circuitry is further configured to move the vehicle (180) from a standstill by selecting a gear ratio based on at least one of a mass of the vehicle, a slope of the vehicle path, and gear parameters of the vehicle.

8. The computer system (110) of any of preceding claim, wherein the processing circuitry is configured to receive the manual input (112) from a user interface (120, 200) comprising a first input element (202) configured to receive a manual input corresponding to a discrete forward movement of the vehicle (180), and a second input element (204) configured to receive a manual input corresponding to a discrete backward movement of the vehicle.

9. The computer system (110) of claim 8, wherein the user interface (120, 200) is comprised in the vehicle (180) or located remotely from the vehicle.

10. The computer system (110) of any of preceding claim, wherein the processing circuitry is further configured to, during motion of the vehicle (180) according to the received manual input (112):
receive a wheel speed of at least one wheel (160) of the vehicle; and
determine if the wheel speed is within a desired range.

11. The computer system (110) of any of preceding claim, wherein the processing circuitry is further configured to:
receive a rotation of a component of a powertrain of the vehicle (180); and
determine if the motion of the vehicle based on the received rotation corresponds to the received manual input (112).

12. A vehicle (180) comprising the computer system (110) of any preceding claim.

13. A computer-implemented method (300), comprising:
receiving (304), by processing circuitry of a computer system (110), a manual input (112) corresponding to a predetermined discrete distance (114) to move a vehicle (180); and
moving (306), by the processing circuitry, the vehicle the predetermined discrete distance according to the received manual input.

14. A computer program product comprising program code for performing, when executed by processing circuitry, the computer-implemented method (300) of claim 13.

15. A non-transitory computer-readable storage medium comprising instructions, which when executed by processing circuitry, cause the processing circuitry to perform the computer-implemented method (300) of claim 13.
